# EUROPEAN PATENT SPECIFICATION

(11) **EP 4 493 628 B1**
(45) Date of publication and mention of the grant of the patent: **09.07.2025**
(21) Application number: 23837965.5
(22) Date of filing: 20.12.2023
(51) Int. Cl.: C08L 53/02

(54) **THERMOPLASTIC ELASTOMER COMPOSITION, PROCESS FOR ITS PRODUCTION, AND WEAR RESISTANT PARTS OBTAINED THEREBY**
THERMOPLASTISCHE ELASTOMERZUSAMMENSETZUNG, VERFAHREN ZU IHRER HERSTELLUNG UND DARAUS HERGESTELLTE VERSCHLEISSFESTE TEILE
COMPOSITION ELASTOMÈRE THERMOPLASTIQUE, SON PROCÉDÉ DE PRODUCTION ET PIÈCES RÉSISTANT À L'USURE AINSI OBTENUES

(30) Priority: 20.12.2022 WO PCT/EP2022/086831
(43) Date of publication of application: 22.01.2025
(73) Proprietor: Industrie Ilpea S.p.A., 21020 Malgesso (IT)
(72) Inventor: CITTADINI, Paolo, 21020 Luvinate (IT); BERNARDI, Paolo, 21024 Biandronno (IT)
(74) Representative: Palladino, Saverio Massimo
(86) International application number: PCT/EP2023/086914
(87) International publication number: WO 2024/133438

(56) References cited:
- CN-A- 101 358 028
- KR-A- 20120 078 558

## Description

### FIELD OF THE INVENTION

The present invention relates to a thermoplastic elastomeric composition characterized by a high wear resistance, to the process for the production of the composition, and to parts produced with the composition, such as sleeves, gaskets for doors of washing machines, bellows and the like.

### STATE OF THE ART

Elastomeric parts are used in various applications in which two rigid parts subject to relative movement need to be connected; this may be the case for instance with ducts for fluids (for instance in the motors or other parts of vehicles), or gaskets that must be capable of retaining their function (preventing the leakage of fluids, in particular water) upon vibration of the parts between which they are positioned, as in the case of gaskets for doors of washing machines.

These parts must have a combination of properties, in particular a hardness in a given range, chemical inertness and retention of their mechanical properties in the range of operating temperatures of the intended application.

Besides, the compositions these parts are made of are thermoplastic, thus allowing the production of the parts, often with relatively complex shapes, by injection molding or similar methods.

Thermoplastic elastomer compositions with specific sets of properties are known in the art.

Patent application EP 2123708 A1 discloses a composition for a gasket, including a hydrogenated styrene-based block copolymer and about 70 to 99 parts by weight of a petroleum-based softener, about 10 to 25 parts by weight of a polyolefin-based resin, about 10 to 25 parts by weight of an inorganic filler, and about 10 to 25 parts by weight of a heat-resistant polymer, wherein the parts by weight of the cited components are based on 100 parts by weight of the hydrogenated styrene-based block copolymer. The composition of this document is said to have good tensile strength and heat resistance.

Patent EP 2196500 B1 describes thermoplastic elastomer compositions comprising 25 to 55 parts by weight of a block terpolymer including an aromatic vinyl compound and an alkene compound; 20 to 50 parts by weight of a paraffin oil; 5 to 15 parts by weight of a polyolefin resin; 5 to 20 parts by weight of an inorganic additive; and 3 to 15 parts by weight of a polyphenylene ether. The declared properties of the composition of this document are surface hardness and resistance to high temperatures.

Patent EP 2792710 B1 describes A thermoplastic elastomer composition comprising (by weight) 30 to 40% of a block terpolymer of an aromatic vinyl compound and alkene or a conjugated diene-based compound; 25 to 50% of a paraffin oil; 1 to 5% of a polyolefin-based resin; 5 to 20% of an inorganic additive; and 5 to 15% of a polyphenylene ether-based resin. Among the stated advantages of this composition are a surface hardness of 0.1 to 40 A (shore A) and high temperature resistance.

Finally, international patent application WO 2012/091230 A1 describes a thermoplastic elastomer comprising (by weight): 25 to 55% of a hydrogenated triblock copolymer; 20 to 50% of a non-aromatic oil; 5 to 15% of a polyolefin resin; 5 to 20% of an inorganic filler; 3 to 15% of a poly(phenylene ether) based resin; and 0.01 to 0.5% of a silicone resin; optionally, the composition may further comprise between 0.1 and 3 parts by weight of a metal or a metal oxide per 100 parts by weight of the sum of the other components. The non-aromatic oil is said to be a paraffin oil, or a mixture, possibly with a naphthenic oil, including at least 50% by weight, preferably at least 65% by weight, of a paraffin oil; all the examples are about compositions prepared with 100% paraffin oil as the non-aromatic oil. The inventors declare that these elastomers have low hardness, high strength, high surface hardness, and abrasion resistance.

Despite the declared good properties of the compositions cited above, these are still not sufficient for recent appliances, in particular those in which the elastomeric part has highly convoluted cross-sections suitable for instance for application in washing machines of reduced size. In a campaign of tests, the present inventors prepared bellows with a very compacted shape, repeating the recipes and reproducing the compositions in the prior art; when subjected to abrasion tests, the bellows so produced yielded unsatisfactory results, giving rise to breaking of the bellow before reaching 50,000 attrition cycles. The known compositions thus do not lend themselves to easy forming by injection molding in highly elaborated shapes; besides, the compositions of the prior art do not present the necessary resistance to wear do to rubbing of the different sections of the elastomeric part, leading to failure (formation of fractures) upon a number of cycles of vibration that is lower than the desired working life of the appliance.

It is thus an object of the present invention to provide a thermoplastic elastomeric composition characterized by easy formability and a high wear resistance, a process for producing the composition, as well as elastomeric parts produced with the composition.

### SUMMARY OF THE INVENTION

These objects are obtained with the present invention that, in a first aspect thereof, refers to a thermoplastic elastomeric composition comprising the following components:
(A) between 10 and 24% by weight of a hydrogenated triblock copolymer;
(B) between 30 and 60% by weight of a naphthenic oil;
(C) between 2 and 20% by weight of a polyolefin resin;
(D) between 4 and 20% by weight of a polyphenylene ether;
(E) between 2 and 20% by weight of a filler;
(F) between 0.1 and 8% by weight of a liquid silicone oil;
(G) between 0.1 and 8% by weight of one or more components selected among amides, silicone resins and polyurethanes.

The compositions of the invention may optionally comprise up to 5% of one or more other additives, cumulatively referred to in the description as component (H).

In its second aspect, the invention refers to a process for the production of a composition as defined above, comprising feeding the solid components of the composition to an extruder partly through a main hopper at the beginning of the extruder and partly through one or two lateral dosing stations (side feeders), and injecting the liquid components into the extruder in one or several feeding ports between the beginning of the extruder and half its length, maintaining the temperature profile of the extruder between 160 and 240 °C. The composition leaving the extruder head is preferably cut into pellets with a head cutting and cooling system.

In its third aspect, the invention is about an elastomeric part produced with the composition described above.

### BRIEF DESCRIPTION OF THE FIGURES

- Fig. 1 is a drawing reproducing an apparatus for carrying out tests of duration of samples of the invention to cycles of abrasion;
- Fig. 2 is a graph showing the results of dynamometric tests carried out on samples of composition of the invention.

### DETAILED DESCRIPTION OF THE INVENTION

In the description that follows, the amounts of components (A) to (G) and of optional component (H), making up the compositions of the invention, are given in terms of percent by weight (abbreviated wt%) unless specified otherwise.

In its first aspect, the present invention refers to a thermoplastic elastomeric composition that has proven particularly easy to form by injection molding and that allows to produce shaped articles with a very high resistance to abrasion wear.

The first component, (A), of the compositions of the invention, is a hydrogenated triblock copolymer.

Hydrogenated triblock copolymers useful for the aims of the invention are hydrogenated Styrene-Ethylene-Propylene-Styrene (referred to in the field with the acronym SEPS), hydrogenated Styrene-Butadiene-Styrene (SBS), hydrogenated Styrene-Isoprene-Styrene (SIS), hydrogenated Styrene-Isoprene-Butadiene-Styrene (SIBS), hydrogenated Styrene-Ethylene/Propylene block copolymer (SEP), hydrogenated Styrene-Ethylene/(Ethylene/Propylene)-Styrene (SEEPS) and, preferably, hydrogenated Styrene-Ethylene-Butadiene-Styrene (SEBS). The hydrogenated triblock copolymer must have a Melt Flow Index < 6 (measured according to ASTM D 1238, g/10 min, 200 °C, 5 kg) and a content of styrene between 10 and 35 wt%.

The hydrogenated triblock copolymer is present in the compositions of the invention in an amount between 10 and 24 wt%, preferably between 18 and 23 wt%, of the overall weight of the composition.

In a preferred embodiment, the hydrogenated triblock copolymer employed in the compositions of the invention has a very high molecular weight, such that a solution at 5 wt% of the polymer in toluene has a viscosity of at least 350 cP when measured at 25 °C following the procedure of standard ASTM D2196-20 Method A.

The second component, (B), of the compositions of the invention, is a naphthenic oil, in an amount between 30 and 60 wt%, and preferably between 38-45 wt%, of the overall weight of the composition.

Naphthenic oil is a complex mixture of hydrocarbons obtained by treating a petroleum fraction with hydrogen in the presence of a catalyst. It consists of hydrocarbons having carbon numbers mostly in the range of C20 through C50, with a relatively low amount of paraffins, and is identified with CAS No. 64742-52-5.

The amount of naphthenic oil in the compositions of the invention is relatively high. Known compositions designed for similar applications as the ones of the present invention generally contain paraffinic oils as softeners. The use of a naphthenic oil as softener was foreseen in the compositions disclosed in patent application EP 2123708 A1; however, this document teaches compositions in which the softener (that may be either a naphthenic or a paraffinic oil) is present in amounts between about 70 to 99 parts by weight per 100 parts by weight of a hydrogenated styrene-based block copolymer, namely, a weight ratio softener:copolymer lower than 1; the document also reports at the end of paragraph [0018] that, when the content of the softener exceeds 99 parts by weight (namely, a weight ratio softener: copolymer higher than 0.99), the composition becomes viscose due to oil bleeding, thus being readily contaminated and hardening upon ageing in operation and is thus unsuitable as material for producing gaskets. The present inventors have instead surprisingly found that with the specific compositions of the invention, in which the weight ratio softener: copolymer is between 1.25 and 6, and comprising the further components specified above, said drawbacks are not observed and the articles produced with these compositions have the useful properties stated above.

Naphthenic oils useful for the aims of the invention have a kinematic viscosity according to ASTM D 445 in a range 50-100 mm²/s, preferably between 50-90 mm²/s, at 40 °C. Oils with these characteristics are commercially available and are sold for instance by Oleotecnica S.p.A. of Segrate (Milan), Italy, under the tradename NYSOL.

Component (C) of the compositions of the invention is a polyolefin resin. This component is present in the compositions of the invention in an amount between 2 and 20 wt%, preferably between 5-15 wt%. The polyolefin is preferably polypropylene (PP), ethylene-propylene copolymer (EP), polyethylene (PE), thermoplastic polyolefins (TPO) and mixtures thereof. The Melt Flow Index (MFI) of the polyolefin is < 10 g/10 min as measured according to ISO 1133 (2,16 kg, 230 °C).

Component (D) of the compositions of the invention is a polyphenylene ether, of minimum purity 99%, that is present in the compositions in an amount of between 5 and 20 wt%, preferably between 7-15 wt%. Examples of polyphenylene ether resins useful for the aims of the invention are poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, copolymers of poly(2,6-dimethyl-1,4-phenylene)ether and poly(2,3,6-trimethyl-1,4-phenylene)ether, copolymers of poly(2,6-dimethyl-1,4-phenylene)ether and poly(2,3,6-triethyl-1,4-phenylene)ether, and the like, and combinations thereof. A preferred polyphenylene ether for the aims of the invention is poly(2,6-dimethyl-1,4-phenylene)ether, having molecular formula (C₈H₈O)n, alone or as a copolymer with poly(2,3,6-trimethyl-1,4-phenylene)ether having formula (C₉H₁₀O)n. The polyphenylene ether resin may have a weight average molecular weight of about 20,000 to about 60,000 g/mol, for example about 22,000 to about 40,000 g/mol, a bulk density between 350 and 550 kg/dm³ as measured according to ISO 1183, and a degree of polymerization corresponding to an intrinsic viscosity of about 0.2 to about 0.8 dL/g, as measured in chloroform as a solvent at 25 °C.

Component (E) is a filler and is present in the compositions in an amount between 2 and 20 wt%, preferably between 8 and 14% by weight. The filler is employed in the form of powders with a grain size between 0.01 and 5 µm. Preferably, the filler is an inorganic material such as, for instance, talc, clay, calcium carbonate, silica, kaolin, calcined kaolin, iron oxide, glass fibers, mica, titanium dioxide, carbon black, graphite, wollastonite, or mixtures thereof; the filler is preferably talc and, more preferably, calcium carbonate.

Component (F) is a liquid silicone oil and is present in the compositions in an amount between 1 and 8 wt%, preferably between 3-6 wt%. This component is a liquid (thus, not a silicone gum or resin) having a viscosity between 40 and 150 mm²/s measured according to ASTM D445.

Finally, component (G) of the compositions of the invention is one or more compounds selected among amides (comprising oleamide, erucamide and so on), silicone resins (comprising ultra-high molecular weight silicone with a molecular weight close to 300,000 g/mol and high molecular weight silicon with a lower Mw but anyway available as a solid material) and polyurethanes (PU, TPU based on polyester and TPU based on polyether); these compounds have a synergistic effect with the liquid silicone oil imparting excellent resistance to wear to the final thermoplastic elastomer. This component (one or a mixture of the cited compounds) is present in the compositions of the invention in amounts between 0.1 and 5%, preferably between 0.1 and 2% by weight.

The compositions of the invention may optionally comprise up to 5% of one or more other additives, cumulatively referred to in the description as component (H). This component may be one, or a mixture of, additive(s) known in the field, such as reinforcing agents, flame retardants, antimicrobial agents, UV blocking agents, hindered amine light stabilizers, antioxidants, etc.

Compared to the compositions of the prior art, the ones of the present invention have a relatively lower content of hydrogenated triblock copolymers (component (A)): this allows for higher wt% contents of the remaining components, in particular the polyphenylene ether (component (D)) and the sum of components (F) and (G). These differences in composition allow to produce parts with excellent physical and mechanical properties. In particular, these parts have Shore A hardness in the range 25-75 as measured according to the ISO 868 A (3 seconds of application of force on the presser foot), a compression set, measured according to the ISO 815 standard, lower than 80% with compression at 100 °C for 72 h and lower than 45% with compression at 23 °C for 22 h.

In addition, the compositions of the invention show a much higher resistance to abrasion than similar compositions of the prior art: the inventors have observed that, in abrasion tests carried out as described in the experimental part, parts produced with the compositions of the invention typically resist to at least 500,000 abrasion cycles at 23 °C, compared less than 50,000 cycles of a composition of the prior art, and to at least 15,000 abrasion cycles at 75 °C compared to less than 5,000 cycles of a composition of the prior art.

In its second aspect, the invention refers to a process for producing a thermoplastic elastomeric composition described above.

The compositions described above can be produced using commercial compounders, preferably with twin-screw extruders, more preferably with co-rotating twin-screws extruders.

The high naphthenic oil/hydrogenated triblock copolymer weight ratio according to invention, at least equal to 1.25, allows processability with twin-screw extruders even using hydrogenated block copolymers with very high viscosities, for example ones with a measured melt flow index < 1 at 200 °C (load 5 kg) according to the ASTM D 1238 standard; in turn, the high viscosity of the triblock copolymer implies a high molecular weight and therefore of the ability to retain the plasticizer avoiding exudations. The silicone oil of the compositions of the invention imparts to the surface of the parts produced thereby a wet-like appearance, which is not however linked to phenomena of release of liquid components from said parts. This combination of features makes possible to obtain articles that retain their mechanical properties in time, avoiding hardening that could lead to failures of the same.

The solid components are partly introduced into a main loading hopper at the beginning of the extruder and partly through one or two lateral dosing stations (side feeders), while the liquid components are injected into the extruder in one or several feeding ports between the beginning of the extruder and half its length.

The loading of the components takes place through the use of gravimetric dosers of single components or pre-weighed mixtures of the same; it would also be possible to use volumetric dosers if these are precisely synchronized; gravimetric dosers are preferred due to the ease of maintaining the desired weight ratio among the different components.

The temperature profile of the extruder is variable depending on the specific composition; generally, this temperature is between 160 and 240 °C.

The composition leaving the extruder head is then preferably cut into small pellets with the classic head cutting and cooling system.

In its third aspect, the invention is about manufactured articles obtained with the compositions described above. These compositions have proven particularly suitable for forming parts with complex and convoluted shapes by injection molding. Elastomeric parts that can be produced with the compositions of the invention are bellows and, particularly, gaskets for washing machine doors.

The invention will be further described by the examples that follow.

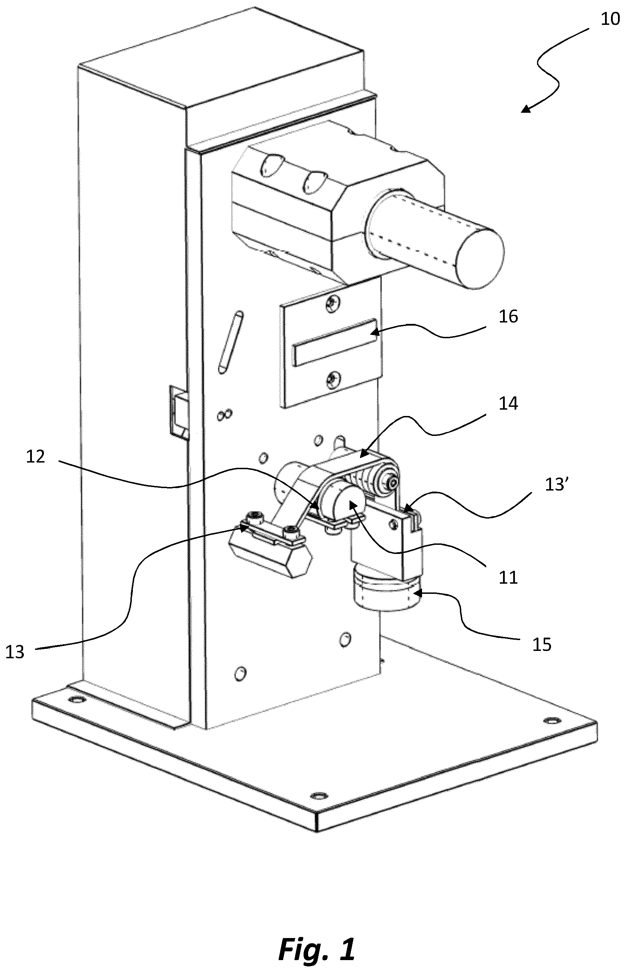

In the experiments, the following instruments and materials were employed:
- twin-screws extruder of size 71 mm, 56 mm L/D produced by ICMA San Giorgio S.p.A. of San Giorgio su Legnano (Milan), Italy;
- apparatus for carrying out abrasion tests assembled in the laboratories of the applicant, schematically illustrated in Fig. 1 and described in detail below;
- component (A), hydrogenated triblock copolymer: SEBS, Europrene^{®} SOL TH 2315 from Versalis;
- component (B), naphthenic oil: Nysol N85 and paraffin oil Tecnol 100 from Oleotecnica S.p.A., Segrate (Milan), Italy;
- component (C), polyolefin resins: EP (Tipplen^{®} K 499 from MOL Petrochemicals Co. Ltd.) and PP (Eltex^{®} P HL001PF from Ineos);
- component (D), polyphenylene ether: Noryl^{™} PPO 640-111 from Sabic;
- component (E), filler: stearic acid-coated CaCO₃, D90 < 10.50 µm, D50 < 2.50 µm, of Nicem s.r.l., Casazza (Bergamo), Italy;
- component (F), silicone oil: Genioplast^{®} Fluid 110 from Wacker Chemie AG, Munich, Germany;
- component (G): blend of UHMW silicone resin Luhvobatch 7001 from Lehmann &Voss & Co. KG, Hamburg, and oleamide from Ultrabatch s.r.l. of Castano Primo (Milan), Italy;
- component (H), additive: antioxidant, blend of Nymanox MD 124 (hydrazine, CAS No. 32687-78-8) and Nymanox RS 14 (triazine phenolic, CAS No. 27676-62-6) from Nymco, Castano Primo (Milan), Italy.

### EXAMPLE 1

This example is about the production of three compositions of the invention and, for comparison, of two compositions according to the prior art. In the following, the three compositions according to the invention are indicated respectively as I1, I2 and I3, while the compositions of the prior art are indicated as C1 and C2; these latter are according to EP 2196500 B1 and WO 2012/091230 A1, respectively.

The components indicated in Table 1 below were compounded in a twin-screws extruder in the reported weight percent amounts:

**Table 1**

| Component | Weight % | | | | |
|---|---|---|---|---|---|
| | I1 | I2 | I3 | C1 | C2 |
| (A) SEBS | 22.2 | 22.2 | 20.2 | 31.5 | 25 |
| (B) Naphthenic oil | 40.7 | 40.7 | 40.7 | / | 21.5 |
| Paraffin oil | / | / | / | 40.5 | 21.5 |
| (C) EP | 8.7 | 8.7 | 8.7 | / | / |
| (C) PP | / | / | / | 9.9 | 9.9 |
| (D) Polyphenylene ether | 8.9 | 8.9 | 8.9 | 4.5 | 4.5 |
| (E) Stearic acid-coated CaCO₃ | 13.3 | 13.3 | 13.3 | 12.6 | 12.6 |
| (F) Silicone oil | 5.0 | 0.7 | 0.7 | / | / |
| (G) UHMW silicone resin + oleamide | 0.7 | 5.0 | 7.0 | 1.0 | 5 |
| (H) Antioxidants | 0.5 | 0.5 | 0.5 | / | / |

In composition I3, component A is of the preferred kind, namely, with high MW giving rise to a solution at 5 wt% in toluene with a viscosity ≥ 350 cP when measured at 25 °C according to standard ASTM D2196-20 Method A.

Composition C2 is not reported as such in WO 2012/091230 A1: it has been produced using the minimum amount of component A allowed by this prior art document, and using a 1:1 mixture of paraffin oil and naphthenic oil as softener; these characteristics have been chosen to obtain a composition as close as possible, remaining within the limits of said document, to the compositions of the present invention, in order to highlight the different and advantageous results obtained by the latter.

For the production of the compositions of the invention, the components SEBS, EP, antioxidants, UHMW silicone + oleamide and PPE were dosed in the main hopper of the extruder; CaCO₃ was added through lateral doser in the middle of the extruder; naphthenic oil was dosed with an injector at the beginning of the extruder; silicone was dosed with a second injector at the beginning of the extruder. Extruder temperatures are in the range 195-200 °C, speed at 300 rpm, output 350 kg/h.

For the production of the compositions of the prior art, the components were added following exactly the same process described above, in order to have comparable results.

### EXAMPLE 2

This example is about the measure of abrasion resistance of the compositions of the invention and of the prior art.

The tests were carried out with an apparatus assembled in the laboratories of the applicant, schematically illustrated in Fig. 1. In brief, the apparatus, 10, comprises a roller 11 with a circular cross section and diameter 20 mm, onto which is wound a first specimen 12 of a composition under test completely covering the circular surface of the roller. The apparatus further comprises two clamps, 13 and 13', for mounting a second specimen, 14, of the composition under test, in the form of a tape; specimen 14 is kept taut against specimen 12 by a constant force due to a metallic part 15 of weight 0.88 kg attached to the lower clamp 13'; the angle formed by the two sections of specimen 14 at the two opposite sides of roller 11 is of 120°. The test is performed by rotating the roller 11, and thus specimen 12, at 105 rpm, and counting the number of cycles before break of specimen 14 by means of a counter 16. A first series of test was carried out at 23 +/-3 °C; a second series of test was carried out at 75 +/-3 °C by positioning apparatus 10 into a climatic chamber.

The compositions obtained in Example 1 (both of the invention and of the prior art) were used to produce tapes of thickness 2.0 mm; specimens 14 in the tests had a width of 17 mm and were 150 ± 10 mm long.

The number of cycles required to break the specimens at the two test temperatures are reported in Table 2 below:

**Table 2**

| Nominal T (°C) | Specimen composition | | | | |
|---|---|---|---|---|---|
| | I1 | I2 | I3 | C1 | C2 |
| 23 | > 500,000 | > 500,000 | > 700,000 | < 50,000 | 44,500 |
| 75 | 15,000 | 30,000 | 55,000 | < 5,000 | 4,000 |

The specimens produced with the compositions of the invention resist to a number of abrasion cycles more than ten times higher than the specimen of the prior art at 23 °C, and at least three times (and up to more than ten times) higher than the specimens of the prior art at 75 °C. Particularly remarkable are the results obtained with parts produced with composition I3, that, at both test temperatures, resist to abrasion for a number of cycles well above ten times the number of cycles reached before breaking by the specimens of the prior art.

### EXAMPLE 3

Composition I1 produced as described in Example 1 was used for preparing specimens for stress-strain measures directed to determining the elongation at break of specimens having shape according to standard KSM 6518.

Three different production runs, referred to below as R1, R2 and R3, were carried out with the composition of the invention as described in Example 1. With each produced composition, three specimens were produced by injection molding, indicated below as R#a, R#b and R#c.

Each specimen was tested for elongation at break with tests according to KSM 6518 standards; the measures were carried out at 100 °C. The results obtained in the tests are reported in the Tables 3 and 4 below, reporting respectively the absolute values obtained in the tests and a statistical analysis of the same.

**Table 3**

| Specimen no. | Tensile stress at 100% (MPa) | Tensile stress at 200% (MPa) | Tensile stress at 300% (MPa) | Tensile stress at break (MPa) | Elongation at break (%) |
|---|---|---|---|---|---|
| R1a | 0.257 | 0.369 | 0.476 | 0.928 | 926.3 |
| R1b | 0.253 | 0.377 | 0.480 | 0.969 | 977.9 |
| R1c | 0.258 | 0.380 | 0.480 | 1.010 | 1022.7 |
| R2a | 0.300 | 0.438 | 0.548 | 1.040 | 928.9 |
| R2b | 0.307 | 0.448 | 0.562 | 1.120 | 964.3 |
| R2c | 0.296 | 0.435 | 0.545 | 1.100 | 983.0 |
| R3a | 0.287 | 0.423 | 0.539 | 1.180 | 959.3 |
| R3b | 0.308 | 0.456 | 0.589 | 1.260 | 981.3 |
| R3c | 0.287 | 0.417 | 0.535 | 1.050 | 853.8 |

**Table 4**

| Series n = 9 | Tensile stress at 100% (MPa) | Tensile stress at 200% (MPa) | Tensile stress at 300% (MPa) | Tensile stress at break (MPa) | Elongation at break (%) |
|---|---|---|---|---|---|
| *x̅* | 0.284 | 0.416 | 0.528 | 1.07 | 955.3 |
| *s* | 0.0220 | 0.0328 | 0.0403 | 0.15 | 48.0 |
| *v* | 7.75 | 7.87 | 7.63 | 9.74 | 5.03 |

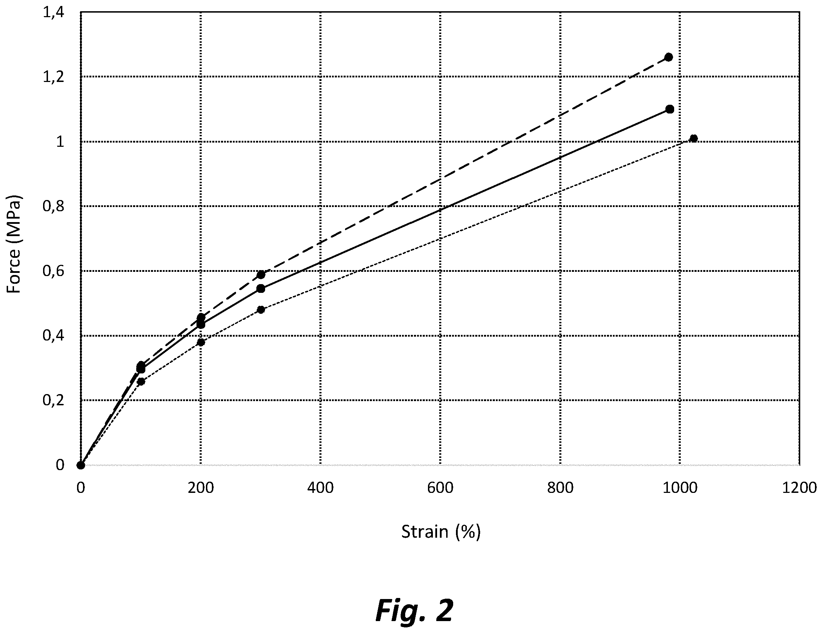

Fig. 2 reports graphically the trend of stress-strain behavior of three tested specimens, one for each of preparation runs R1, R2 and R3; the curve for only one specimen for preparation run is shown in the figure for representation clarity, since the three curves for the specimens of each preparation were very close. In particular, in Fig. 2 are presented the stress-strain curves obtained with specimen R1c (lower curve, dotted), with specimen R2c (middle curve, solid) and with specimen R3b (upper curve, dashed).

Similar results have been obtained with compositions I2 and I3 which, produced in a great number of production runs, displayed values of elongation at break between 800 and 1200% and ultimate loads between 0.5 and 1.4 Mpa at 100 °C.

Similar tests carried out at 25 °C on specimens prepared with compositions I1, I2 and I3 resulted in values of elongation at break between 450 and 650%.

Particularly interesting is the behavior of the compositions of the invention compared to those of prior art regarding the trend of elongation at break at different temperatures: the compositions of both considered prior art documents show a decrease of the value of elongation at break with increasing temperature: see, in this regard, Table 1 in EP 2196500 B1, and Table 2 in WO 2012/091230 A1, the relevant data of which are reproduced below:

**Table 5**

| Document | Example | Elongation at break (%) | |
|---|---|---|---|
| | | 23/25 °C | 100 °C |
| EP 2196500 B1 | 1 | 750 | 430 |
| | 2 | 1100 | 700 |
| | 3 | 650 | 500 |
| WO 2012/091230 A1 | 3 | 810 | 410 |
| | 4 | 820 | 420 |
| | 5 | 830 | 410 |
| | 6 | 820 | 400 |
| | 7 | > 800 | 460 |

This behavior of the compositions of the prior art has been confirmed by the present inventors that, in tests carried out on specimens produced with compositions C1 and C2, have measured values of elongation at break at 75 °C of 420% for a specimen produced with composition C1, and of 460% for a specimen produced with composition C2.

To the contrary, the compositions of the invention display values of elongation at break that increase when increasing the temperature.

An increase in elongation at break with increasing temperature, as displayed by articles produced with the compositions of the present invention (and contrary to the behavior of the compositions of the prior art) is useful where a product made with these compositions must stretch, bend or in any case be stressed in elongation by working at high temperatures, as it happens for instance with bellows of a washing machine working at 90 °C or a washer-dryer that works at temperatures as high as 130 °C.

Further tests carried out with parts formed in the shape of bellow showed a very good behavior of the bellow thanks to the long elongation at break of the compositions of the invention.

## Claims

1. A thermoplastic elastomeric composition comprising:
(A) between 10 and 24% by weight of a styrene hydrogenated triblock copolymer having a Melt Flow Index < 6 measured according to ASTM D 1238 and a wt% of styrene between 10 and 35;
(B) between 30 and 60% by weight of a naphthenic oil;
(C) between 2 and 20% by weight of a polyolefin resin having a Melt Flow Index ≤ 100 g/10 min measured according to ISO 1133;
(D) between 4 and 20% by weight of a polyphenylene ether;
(E) between 2 and 20% by weight of a filler;
(F) between 0.1 and 8% by weight of a liquid silicone oil having a viscosity between 40 and 150 mm²/s measured according to ASTM D445;
(G) between 0.1 and 8% by weight of one or more components selected among amides, silicone resins and polyurethanes.

2. A thermoplastic elastomeric composition according to claim 1, further comprising up to 5% of one or more other additives selected among reinforcing agents, flame retardants, antimicrobial agents, UV blocking agents, hindered amine light stabilizers, and antioxidants.

3. A thermoplastic elastomeric composition according to any one of the preceding claims, wherein the amount of styrene hydrogenated triblock copolymer is between 18 and 23 wt%.

4. A thermoplastic elastomeric composition according to any one of the preceding claims, wherein the amount of naphthenic oil is between 38 and 45 wt%.

5. A thermoplastic elastomeric composition according to any one of the preceding claims, wherein the amount of polyolefin resin is between 5 and 15 wt%.

6. A thermoplastic elastomeric composition according to any one of the preceding claims, wherein the amount of polyphenylene ether is between 7 and 15 wt%.

7. A thermoplastic elastomeric composition according to any one of the preceding claims, wherein the amount of filler is between 8 and 14 wt%.

8. A thermoplastic elastomeric composition according to any one of the preceding claims, wherein the amount of silicone oil is between 3 and 6 wt%.

9. A thermoplastic elastomeric composition according to any one of the preceding claims, wherein the amount of component (G) is between 0.1 and 2 wt%.

10. A thermoplastic elastomeric composition according to any one of the preceding claims, wherein the styrene hydrogenated triblock copolymer is selected among hydrogenated Styrene-Ethylene-Propylene-Styrene (SEPS), hydrogenated Styrene-Butadiene-Styrene (SBS), hydrogenated Styrene-Isoprene-Styrene (SIS), hydrogenated Styrene-Isoprene-Butadiene-Styrene (SIBS), hydrogenated Styrene-Ethylene/Propylene block copolymer (SEP), hydrogenated Styrene-Ethylene/(Ethylene/Propylene)-Styrene (SEEPS) and, preferably, hydrogenated Styrene-Ethylene-Butadiene-Styrene (SEBS) and mixtures thereof.

11. A thermoplastic elastomeric composition according to any one of the preceding claims, wherein the naphthenic oil has a viscosity in the range 50-100 mm²/s as measured according to ASTM D 445.

12. A thermoplastic elastomeric composition according to any one of the preceding claims, wherein the polyolefin is selected among polypropylene (PP), ethylene-propylene copolymer (EP), polyethylene (PE), thermoplastic polyolefins (TPO) and mixtures thereof.

13. A thermoplastic elastomeric composition according to any one of the preceding claims, wherein the polyphenylene ether is selected among poly(2,6-dimethyl-1,4-phenylene)ether, poly(2,6-diethyl-1,4-phenylene)ether, poly(2,6-dipropyl-1,4-phenylene)ether, poly(2-methyl-6-ethyl-1,4-phenylene)ether, poly(2-methyl-6-propyl-1,4-phenylene)ether, poly(2-ethyl-6-propyl-1,4-phenylene)ether, poly(2,6-diphenyl-1,4-phenylene)ether, copolymers of poly(2,6-dimethyl-1,4-phenylene)ether and poly(2,3,6-trimethyl-1,4-phenylene)ether, copolymers of poly(2,6-dimethyl-1,4-phenylene)ether and poly(2,3,6-triethyl-1,4-phenylene)ether and mixtures thereof.

14. A thermoplastic elastomeric composition according to any one of the preceding claims, wherein the polyphenylene ether has a weight average molecular weight between about 20,000 to about 60,000 g/mol, a bulk density between 350 and 550 kg/dm³ as measured according to ISO 1183, and a degree of polymerization corresponding to an intrinsic viscosity of about 0.2 to about 0.8 dL/g, as measured in chloroform as a solvent at 25 °C.

15. A thermoplastic elastomeric composition according to any one of the preceding claims, wherein the filler is in the form of powders with a grain size between 0.01 and 5 µm.

16. A thermoplastic elastomeric composition according to any one of the preceding claims, wherein the filler is an inorganic material selected among talc, clay, calcium carbonate, silica, kaolin, calcined kaolin, iron oxide, glass fibers, mica, titanium dioxide, carbon black, graphite, wollastonite, or mixtures thereof.

17. A thermoplastic elastomeric composition according to any one of the preceding claims, wherein component (G) is selected among oleamide, erucamide, a high molecular weight or ultra-high molecular weight silicone resin, a polyurethane, a polyester-based thermoplastic polyurethane, a polyether-based thermoplastic polyurethane, and mixtures thereof.

18. A process for the production of a thermoplastic elastomeric composition of any one of claims 1 to 17, comprising feeding the solid components of the composition to an extruder partly through a main hopper at the beginning of the extruder and partly through one or two lateral dosing stations (side feeders), and injecting the liquid components into the extruder in one or several feeding ports between the beginning of the extruder and half its length, maintaining the temperature profile of the extruder between 160 and 240 °C.

19. A process according to claim 18, further comprising an operation of cut into pellets with a head cutting and cooling system the composition leaving the extruder head.

20. An elastomeric part produced by injection molding with the thermoplastic elastomeric composition of any one of claims 1 to 17.

21. An elastomeric part according to claim 20 in the form of a bellow.

22. An elastomeric part according to claim 20 in the form of a gasket for the door of a washing machine or a washer-dryer machine.

## Patentansprüche

1. Thermoplastische Elastomerzusammensetzung, umfassend:
(A) zwischen 10 und 24 Gew.-% eines hydrierten Styrol-Triblock-Copolymers mit einem Schmelzflussindex < 6, gemessen nach ASTM D 1238, und zwischen 10 und 35 Gew.-% Styrol;
(B) zwischen 30 und 60 Gew.-% eines naphthenischen Öls;
(C) zwischen 2 und 20 Gew.-% eines Polyolefinharzes mit einem Schmelzflussindex ≤ 100 g/10 min, gemessen nach ISO 1133;
(D) zwischen 4 und 20 Gew.-% eines Polyphenylenethers;
(E) zwischen 2 und 20 Gew.-% eines Füllstoffs;
(F) zwischen 0,1 und 8 Gew.-% eines flüssigen Silikonöls mit einer Viskosität zwischen 40 und 150 mm²/s, gemessen nach ASTM D445;
(G) zwischen 0,1 und 8 Gew.-% eines oder mehrerer Bestandteile, ausgewählt aus Amiden, Silikonharzen und Polyurethanen.

2. Thermoplastische Elastomerzusammensetzung nach Anspruch 1, ferner umfassend bis zu 5 % eines oder mehrerer anderer Additive, die aus Verstärkungsmitteln, Flammschutzmitteln, antimikrobiellen Mitteln, UVblockierenden Mitteln, gehinderten Amin-Lichtstabilisatoren und Antioxidantien ausgewählt sind.

3. Thermoplastische Elastomerzusammensetzung nach einem der vorhergehenden Ansprüche,
wobei die Menge an hydrierten Styrol-Triblock-Copolymeren zwischen 18 und 23 Gew.-% beträgt.

4. Thermoplastische Elastomerzusammensetzung nach einem der vorhergehenden Ansprüche,
wobei die Menge an naphthenischem Öl zwischen 38 und 45 Gew.-% beträgt.

5. Thermoplastische Elastomerzusammensetzung nach einem der vorhergehenden Ansprüche,
wobei die Menge an Polyolefinharz zwischen 5 und 15 Gew.-% beträgt.

6. Thermoplastische Elastomerzusammensetzung nach einem der vorhergehenden Ansprüche,
wobei die Menge an Polyphenylenether zwischen 7 und 15 Gew.-% beträgt.

7. Thermoplastische Elastomerzusammensetzung nach einem der vorhergehenden Ansprüche,
wobei die Menge an Füllstoff zwischen 8 und 14 Gew.-% beträgt.

8. Thermoplastische Elastomerzusammensetzung nach einem der vorhergehenden Ansprüche,
wobei die Menge an Silikonöl zwischen 3 und 6 Gew.-% beträgt.

9. Thermoplastische Elastomerzusammensetzung nach einem der vorhergehenden Ansprüche,
wobei die Menge an Bestandteil (G) zwischen 0,1 und 2 Gew.-% beträgt.

10. Thermoplastische Elastomerzusammensetzung nach einem der vorhergehenden Ansprüche,
wobei das hydrierte Styrol-Triblock-Copolymer ausgewählt ist aus hydriertem Styrol-Ethylen-Propylen-Styrol (SEPS), hydriertem Styrol-Butadien-Styrol (SBS), hydriertem Styrol-Isopren-Styrol (SIS), hydriertem Styrol-Isopren-Butadien-Styrol (SIBS), hydriertem Styrol-Ethylen/Propylen-Blockcopolymer (SEP), hydriertem Styrol-Ethylen/(Ethylen/Propylen)-Styrol (SEEPS) und vorzugsweise hydriertem Styrol-Ethylen-Butadien-Styrol (SEBS) sowie Mischungen davon.

11. Thermoplastische Elastomerzusammensetzung nach einem der vorhergehenden Ansprüche,
wobei das naphthenische Öl eine Viskosität im Bereich zwischen 50-100 mm²/s aufweist, gemessen nach ASTM D445.

12. Thermoplastische Elastomerzusammensetzung nach einem der vorhergehenden Ansprüche,
wobei das Polyolefin ausgewählt ist aus Polypropylen (PP), Ethylen-Propylen-Copolymer (EP), Polyethylen (PE), thermoplastischen Polyolefinen (TPO) und Mischungen davon.

13. Thermoplastische Elastomerzusammensetzung nach einem der vorhergehenden Ansprüche,
wobei der Polyphenylenether ausgewählt ist aus Poly(2,6-dimethyl-1,4-phenylen)ether, Poly(2,6-diethyl-1,4-phenylen)ether, Poly(2,6-dipropyl-1,4-phenylen)ether, Poly(2-methyl-6-ethyl-1,4-phenylen)ether, Poly(2-methyl-6-propyl-1,4-phenylen)ether, Poly(2-ethyl-6-propyl-1, 4-phenylen)ether, Poly(2,6-diphenyl-1,4-phenylen)ether, Copolymeren von Poly(2,6-dimethyl-1,4-phenylen)ether und Poly(2,3,6-trimethyl-1,4-phenylen)ether, Copolymeren von Poly(2,6-dimethyl-1,4-phenylen)ether und Poly(2,3,6-triethyl-1,4-phenylen)ether und Mischungen davon.

14. Thermoplastische Elastomerzusammensetzung nach einem der vorhergehenden Ansprüche,
wobei der Polyphenylenether ein gewichtsmittleres Molekulargewicht zwischen etwa 20.000 und etwa 60.000 g/mol, eine Schüttdichte zwischen 350 und 550 kg/dm³, gemessen nach ISO 1183, und einen Polymerisationsgrad, der einer intrinsischen Viskosität von etwa 0,2 bis etwa 0,8 dl/g entspricht, gemessen in Chloroform als Lösungsmittel bei 25 °C, aufweist.

15. Thermoplastische Elastomerzusammensetzung nach einem der vorhergehenden Ansprüche, wobei der Füllstoff in Form von Pulvern mit einer Korngröße zwischen 0,01 und 5 µm vorliegt

16. Thermoplastische Elastomerzusammensetzung nach einem der vorhergehenden Ansprüche,
wobei der Füllstoff ein anorganisches Material ist, das aus Talk, Ton, Kalziumkarbonat, Siliziumdioxid, Kaolin, kalziniertem Kaolin, Eisenoxid, Glasfasern, Glimmer, Titandioxid, Ruß, Graphit, Wollastonit oder Mischungen davon ausgewählt ist.

17. Thermoplastische Elastomerzusammensetzung nach einem der vorhergehenden Ansprüche,
wobei Bestandteil (G) ausgewählt ist aus Oleamid, Erucamid, einem hochmolekularen oder ultrahochmolekularen Silikonharz, einem Polyurethan, einem thermoplastischen Polyurethan auf Polyesterbasis, einem thermoplastischen Polyurethan auf Polyetherbasis und Mischungen davon.

18. Verfahren zur Herstellung einer thermoplastischen Elastomerzusammensetzung nach einem der Ansprüche 1 bis 17, umfassend das Zuführen der festen Bestandteile der Zusammensetzung zu einem Extruder, teilweise durch einen Haupttrichter am Anfang des Extruders und teilweise durch eine oder zwei seitliche Dosierstationen (Seitenzuführvorrichtungen), und das Einspritzen der flüssigen Bestandteile in den Extruder in einer oder mehreren Zuführöffnungen zwischen dem Anfang des Extruders und der Hälfte seiner Länge, wobei das Temperaturprofil des Extruders zwischen 160 und 240 °C gehalten wird.

19. Verfahren nach Anspruch 18, ferner umfassend einen Vorgang des Zerschneidens der den Extruderkopf verlassenden Zusammensetzung in Pellets mit einem Kopfschneide- und -kühlsystem.

20. Elastomerteil, das durch Spritzgießen mit der thermoplastischen Elastomerzusammensetzung nach einem der Ansprüche 1 bis 17 hergestellt wird.

21. Elastomerteil nach Anspruch 20 in Form eines Faltenbalgs.

22. Elastomerteil nach Anspruch 20 in Form einer Dichtung für die Tür einer Waschmaschine oder eines Waschtrockners.

## Revendications

1. Composition élastomère thermoplastique comprenant :
(A) entre 10 et 24 % en poids d'un copolymère tribloc hydrogéné styrène ayant un indice de fluidité à chaud < 6 mesuré selon la norme ASTM D 1238 et un pourcentage en poids de styrène entre 10 et 35 ;
(B) entre 30 et 60 % en poids d'une huile naphténique ;
(C) entre 2 et 20 % en poids d'une résine de polyoléfine ayant un indice de fluidité à chaud ≤ 100 g/10 min mesuré selon la norme ISO 1133 ;
(D) entre 4 et 20 % en poids d'un polyphénylène éther ;
(E) entre 2 et 20 % en poids d'un remplisseur ;
(F) entre 0,1 et 8 % en poids d'une huile de silicone liquide ayant une viscosité comprise entre 40 et 150 mm²/s mesurée selon la norme ASTM D445 ;
(G) entre 0,1 et 8 % en poids d'un ou plusieurs composants choisis parmi les amides, les résines de silicone et les polyuréthanes.

2. Composition élastomère thermoplastique selon la revendication 1, comprenant en outre jusqu'à 5 % d'un ou plusieurs autres additifs choisis parmi les agents de renforcement, les ignifuges, les agents antimicrobiens, les agents bloquant les UV, les stabilisants à la lumière à base d'amines encombrées et les antioxydants.

3. Composition élastomère thermoplastique selon l'une quelconque des revendications précédentes,
dans laquelle la quantité de copolymère tribloc hydrogéné styrène est entre 18 et 23 % en poids.

4. Composition élastomère thermoplastique selon l'une quelconque des revendications précédentes,
dans laquelle la quantité d'huile naphténique est entre 38 et 45 % en poids.

5. Composition élastomère thermoplastique selon l'une quelconque des revendications précédentes,
dans laquelle la quantité de résine de polyoléfine est entre 5 et 15 % en poids.

6. Composition élastomère thermoplastique selon l'une quelconque des revendications précédentes,
dans laquelle la quantité de polyphénylène éther est entre 7 et 15 % en poids.

7. Composition élastomère thermoplastique selon l'une quelconque des revendications précédentes,
dans laquelle la quantité de remplisseur est entre 8 et 14 % en poids.

8. Composition élastomère thermoplastique selon l'une quelconque des revendications précédentes,
dans laquelle la quantité d'huile de silicone est entre 3 et 6 % en poids.

9. Composition élastomère thermoplastique selon l'une quelconque des revendications précédentes,
dans laquelle la quantité de composant (G) est entre 0,1 et 2 % en poids.

10. Composition élastomère thermoplastique selon l'une quelconque des revendications précédentes,
dans laquelle le copolymère tribloc hydrogéné styrène est choisi parmi le styrène-éthylène-propylène-styrène hydrogéné (SEPS), le styrène-butadiène-styrène hydrogéné (SBS), le styrène-isoprène-styrène hydrogéné (SIS), le styrène-isoprène-butadiène-styrène hydrogéné (SIBS), le copolymère bloc styrène-éthylène/propylène hydrogéné (SEP), le styrène-éthylène/(éthylène/propylène)-styrène (SEEPS) hydrogéné et, de préférence, le styrène-éthylène-butadiène-styrène hydrogéné (SEBS) et leurs mélanges.

11. Composition élastomère thermoplastique selon l'une quelconque des revendications précédentes,
dans laquelle l'huile naphténique a une viscosité entre 50 et 100 mm²/s telle que mesurée selon la norme ASTM D 445.

12. Composition élastomère thermoplastique selon l'une quelconque des revendications précédentes,
dans laquelle la polyoléfine est choisie parmi le polypropylène (PP), le copolymère éthylène-propylène (EP), le polyéthylène (PE), les polyoléfines thermoplastiques (TPO) et leurs mélanges.

13. Composition élastomère thermoplastique selon l'une quelconque des revendications précédentes,
dans laquelle le polyphénylène éther est choisi parmi le poly(2,6-diméthyl-1,4-phénylène)éther, le poly(2,6-diéthyl-1,4-phénylène)éther, le poly(2,6-dipropyl-1,4-phénylène)éther, le poly(2-méthyl-6-éthyl-1,4-phénylène)éther, le poly(2-méthyl-6-propyl-1,4-phénylène)éther, le poly(2-éthyl-6-propyl-1,4-phénylène)éther, le poly(2,6-diphényl-1,4-phénylène)éther, les copolymères de poly(2,6-diméthyl-1,4-phénylène)éther et de poly(2,3,6-triméthyl-1,4-phénylène)éther, les copolymères de poly(2,6-diméthyl-1,4-phénylène)éther et de poly(2,3,6-triéthyl-1,4-phénylène)éther et leurs mélanges.

14. Composition élastomère thermoplastique selon l'une quelconque des revendications précédentes,
dans laquelle le polyphénylène éther a une masse moléculaire moyenne en poids entre environ 20 000 et environ 60 000 g/mol, une densité apparente entre 350 et 550 kg/dm³ telle que mesurée selon la norme ISO 1183, et un degré de polymérisation correspondant à une viscosité intrinsèque d'environ 0,2 à environ 0,8 dl/g, telle que mesurée dans le chloroforme en tant que solvant à 25 °C.

15. Composition élastomère thermoplastique selon l'une quelconque des revendications précédentes, dans laquelle le remplisseur se présente sous la forme de poudres ayant une granulométrie entre 0,01 et 5 µm.

16. Composition élastomère thermoplastique selon l'une quelconque des revendications précédentes,
dans laquelle le remplisseur est un matériau inorganique choisi parmi le talc, l'argile, le carbonate de calcium, la silice, le kaolin, le kaolin calciné, l'oxyde de fer, les fibres de verre, le mica, le dioxyde de titane, le noir de carbone, le graphite, la wollastonite, ou leurs mélanges.

17. Composition élastomère thermoplastique selon l'une quelconque des revendications précédentes,
dans laquelle le composant (G) est choisi parmi l'oléamide, l'érucamide, une résine de silicone de poids moléculaire élevé ou de poids moléculaire ultra-élevé, un polyuréthane, un polyuréthane thermoplastique à base de polyester, un polyuréthane thermoplastique à base de polyéther, et leurs mélanges.

18. Procédé de production d'une composition élastomère thermoplastique selon l'une quelconque des revendications 1 à 17, comprenant l'alimentation des composants solides de la composition dans une extrudeuse en partie à travers une trémie principale au début de l'extrudeuse et en partie à travers un ou deux postes de dosage latéraux (alimentateurs latéraux), et l'injection des composants liquides dans l'extrudeuse dans un ou plusieurs orifices d'alimentation entre le début de l'extrudeuse et la moitié de sa longueur, en maintenant le profil de température de l'extrudeuse entre 160 et 240 °C.

19. Procédé selon la revendication 18, comprenant en outre une opération de découpe en pastilles avec un système de découpe et de refroidissement de la tête, la composition quittant la tête d'extrudeuse.

20. Pièce en élastomère produite par moulage par injection avec la composition élastomère thermoplastique de l'une quelconque des revendications 1 à 17.

21. Pièce en élastomère selon la revendication 20 sous la forme d'un soufflet.

22. Pièce en élastomère selon la revendication 20 sous la forme d'un joint d'étanchéité pour la porte d'une machine à laver ou d'une machine laveuse-sécheuse.
